# EUROPÄISCHE PATENTSCHRIFT

(11) **EP 2 462 009 B1**
(45) Veröffentlichungstag und Bekanntmachung des Hinweises auf die Patenterteilung: **14.08.2013**
(21) Anmeldenummer: 10800696.6
(22) Anmeldetag: 09.12.2010
(51) Int. Cl.: B60R 13/08

(54) **STIRNWANDANORDNUNG FÜR EINEN MOTORRAUM EINES KRAFTFAHRZEUGS**
END WALL ARRANGEMENT FOR AN ENGINE COMPARTMENT OF A MOTOR VEHICLE
DISPOSITIF DE PAROI FRONTALE POUR LE COMPARTIMENT MOTEUR D'UN VÉHICULE À MOTEUR

(30) Priorität: 23.12.2009 DE 102009060168; 14.05.2010 DE 102010020571
(43) Veröffentlichungstag der Anmeldung: 13.06.2012
(73) Patentinhaber: Volkswagen Aktiengesellschaft, 38436 Wolfsburg (DE)
(72) Erfinder: SCHILLER, Dirk, 29229 Celle (DE)
(86) Internationale Anmeldenummer: PCT/EP2010/007478
(87) Internationale Veröffentlichungsnummer: WO 2011/076343

(56) Entgegenhaltungen:
- DE-A1- 4 212 704
- DE-A1-102004 022 895

## Beschreibung

Die vorliegende Erfindung betrifft eine Stirnwandanordnung gemäß dem Oberbegriff des Anspruchs 1.

In einigen Kraftfahrzeugen werden für besonders leistungsstarke Motoren sowie Dieselmotoren zusätzliche Wärmeabschirmbleche zum Schutz der Bremsleitungen sowie der Klimaleitungen für Kältemittel und Vor- bzw. Nachlaufwasser eingesetzt. Die vorgenannten Bauteile sind insbesondere im Stirnwandbereich des Motorraumes angebracht. Insofern ergeben sich zahlreiche Bauteile im Stirnwandbereich des Motorraumes, die der Abschirmung vor hohen Temperaturen dienen.

Aus der DE 10 2004 022 895 A1 ist ein schallabsorbierendes und flächiges Verkleidungselement bekannt geworden. Das dargestellte Verkleidungselement ist zur Montage unterhalb des Motorraumes vorgesehen und mit einer Serviceklappe ausgestattet, die beispielsweise für Servicearbeiten (Motorölwechsel etc.) geöffnet werden kann. Durch die Serviceklappe kann für Servicearbeiten auf die Demontage des gesamten Verkleidungselementes verzichtet werden.

Ein derartiges Verkleidungselement ist jedoch nicht zur Montage an der Motorstirnwand geeignet bzw. vorgesehen.

Die DE 42 12 704 A1, die dem Oberbegriff des Anspruchs 1 entspricht, beschreibt mittels des Hohlspritzverfahrens hergestellte Kunststoff-Wandungsteile von z. B. dem Innenraum eines Kraftwagens zugekehrten Ein- oder Anbauteilen. Bei Wandungsteilen, die insbesondere auf der einer Spritzwand oder dem Innenraum abgewandten Seite durch eine Geräusch- und/oder Wärmequelle beaufschlagbar sind, werden die Hohlräume so angeordnet, dass ein direkter Geräusch- und/oder Wärmedurchgang durch das Wandungsteil und dabei insbesondere zu den Fahrgasten hin verhindert wird.

Die Aufgabe der vorliegenden Erfindung besteht darin, eine Stirnwandanordnung mit mindestens einem Bauteil vorzuschlagen, wobei das Bauteil mit einer Abschirmung gegen hohe Temperaturen ausgestattet ist.

Erfindungsgemäß wird diese Aufgabe durch eine Stirnwandanordnung mit den Merkmalen des Anspruchs 1 gelöst. Dadurch dass das Verkleidungselement mit einer Klappe ausgestattet ist, wobei die Klappe wärmeisolierende Eigenschaften aufweist und wahlweise das mindestens eine Bauteil verdeckt bzw. freigibt, kann auf eine separate Bauteilverkleidung verzichtet werden. Nichtsdestotrotz wird durch die Klappe in dem stirnwandseitigen Verkleidungselement eine Montage und sonstige Zugänglichkeit der darunter liegenden Teile ermöglicht. Es wird nunmehr ein bisher quasi ungenutzter Bereich des Verkleidungselementes sinnvoll genutzt. Das zuvor notwendige mindestens eine Wärmeabschirmblech wird entsprechend eingespart. Der Montageaufwand wird reduziert, da nun weniger bzw. gar keine Wärmeabschirmbleche mehr verbaut werden müssen. Auch ergeben sich weniger Durchbrüche und Löcher im akustisch sensiblen Stirnwandbereich.

Weitere vorteilhafte Ausgestaltungen der vorliegenden Erfindung ergeben sich insbesondere durch die Merkmale der Unteransprüche.

In einer bevorzugten Ausgestaltung der Erfindung kann beispielsweise vorgesehen sein, dass das Verkleidungselement mit mindestens einer, vorzugsweise drei Klemmscheiben an der Stirnwand des Motorraumes angebracht ist. Die Befestigung mit Klemmscheiben stellt eine kostengünstige und sichere Befestigungsmöglichkeit für das Verkleidungselement an der Stirnwand dar.

In einer weiteren bevorzugten Ausgestaltung der Erfindung kann insbesondere vorgesehen sein, dass es sich bei dem Verkleidungselement um ein flächiges Verkleidungselement handelt, welches die Stirnwand zumindest abschnittsweise, vorzugsweise vollständig, überdeckt. Insofern kann sichergestellt werden, dass der im Motorraum auftretende Lärm nicht oder zumindest in erträglichem Maße im Fahrgastraum wahrgenommen wird.

Ferner kann vorteilhafterweise vorgesehen sein, dass die Klappe flächig ausgestaltet ist und mit einem Scharnier, beispielsweise einem Filmscharnier, an dem Verkleidungselement angebracht ist. Insofern kann sichergestellt werden, dass die Klappe unverlierbar mit dem Verkleidungselement verbunden ist. Insbesondere bei einem Werkstattaufenthalt kann so sichergestellt werden, dass die Klappe nicht unbeabsichtigt verloren geht.

Auch kann vorteilhafterweise vorgesehen sein, dass die Klappe wahlweise in einen geöffneten Zustand und in einen geschlossenen Zustand verschwenkt werden kann, wobei das mindestens eine Bauteil in einem geöffneten Zustand zugänglich ist, und das mindestens eine Bauteil in einem geschlossenen Zustand durch die Klappe verdeckt ist.

Darüber hinaus kann vorteilhafterweise vorgesehen sein, dass es sich bei dem mindestens einen Bauteil um eine Bremsdruckleitung, Unterdruckleitung, elektrische Leitung, Klimaleitung oder ähnliche Leitung handelt. Insbesondere die vorgenannten Bauteile sind zumindest abschnittsweise an der Stirnwand eines Motorraums verlegt und bedürfen vorzugsweise einer Abschirmung gegenüber der Motorwärme. Hier kann durch die erfindungsgemäße Stirnwandanordnung eine preiswerte Abschirmung vorgenommen werden, da auf separate Wärmeschutzbleche verzichtet werden kann.

Vorzugsweise kann ebenfalls vorgesehen sein, dass es sich um mindestens zwei Bauteile, vorzugsweise eine Anzahl von Bauteilen, handelt, die wahlweise von der Klappe verdeckt werden bzw. freigegeben werden können. In diesem Fall müssen beispielsweise keine zusätzlichen Maßnahmen ergriffen werden, beispielsweise eine Perforation herausgelöst werden, wenn das Fahrzeug ein Klimagerät bekommt (keine Unterscheidung zwischen Heizgerät und Klimagerät). Hieraus resultiert weniger Montageaufwand sowie geringere Fehlermöglichkeit bei der Montage, da beide Bauteile durch die Klappe vor Wärme geschützt sind.

Zur lösbaren Befestigung, d.h. Halterung der Klappe in einer geschlossenen Position, kann vorzugsweise vorgesehen sein, dass die Klappe mit mindestens einer Klemmscheibe, vorzugsweise zwei Klemmscheiben, oder anderen hitzebeständigen Befestigungselementen lösbar mir der Stirnwand verbunden ist.

Auch kann vorzugsweise vorgesehen sein, dass die Klappe mit Öffnungen ausgestattet ist, durch die in einem geschlossenen Zustand Anschlüsse, beispielsweise Wasseranschlüsse, die sich auf der Stirnwand befinden, herausragen können. Insofern kann die Klappe auch auf entsprechende Ausgestaltungen bzw. Anbauten auf der Stirnwand auf einfache Art und Weise angepasst werden.

In einer weiteren vorteilhaften Ausgestaltung der Erfindung kann vorgesehen sein, dass es sich bei dem Filmscharnier um Aluminiumfolie handelt oder das Filmscharnier zumindest teilweise aus Aluminiumfolie besteht. Die Aluminiumfolie stabilisiert das Klappscharnier und hat den wesentlichen Vorteil, dass die Klappe nach dem Öffnen stehen bleibt. Ein Monteur hat folglich beide Hände für Reparaturen zur Verfügung. Es erfolgt kein Zurückschnellen der Klappe.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine erfindungsgemäße Stirnwandanordnung während der Montage des Verkleidungselementes, insbesondere bei der Anbringung dreier Klemmscheiben;
- Fig. 2: eine erfindungsgemäße Stirnwandanordnung während der Montage des Verkleidungselementes, insbesondere bei der Montage von Bremskraftverstärker, ESP-Steuergerät, Bremsdruckleitung und Klimaleitungen;
- Fig. 3: eine erfindungsgemäße Stirnwandanordnung während der Montage des Verkleidungselementes, insbesondere bei dem Schließen der Klappe;
- Fig. 4: eine erfindungsgemäße Stirnwandanordnung während der Montage des Verkleidungselementes, insbesondere bei der Montage der Wasseranschlüsse.

Folgende Bezugszeichen werden in den Abbildungen verwendet.
- 1: Stirnwand (Rohbau)
- 2: Verkleidungselement (Dämpfung Stirnwand)
- 3: Klappe
- 4: Klemmscheibe (Befestigungselemente)
- 5: Klimaleitung (Kältemittel)
- 6: Bremsdruckleitung
- 7: Klimaleitung (für Kältemittel)
- 8: Bremsdruckleitung
- 9: Klemmscheibe (Klappenbefestigung)
- 10: Öffnung (Ausschnitt für Heizungsleitung Vor-/Nachlauf)
- 11: Wasseranschluss (Vorlauf- / Nachlaüfschläuche Heizung)
- 12: Bremskraftverstärker
- 13: ESP-Steuergerät

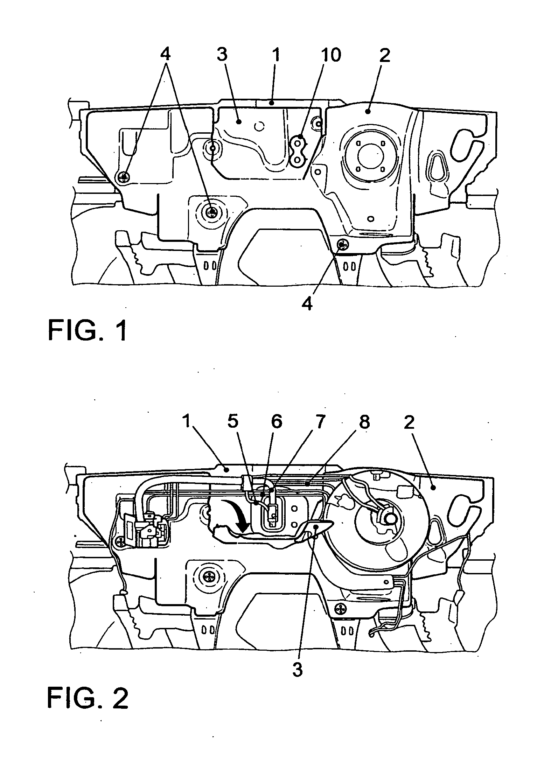

Zunächst wird auf Fig. 1 Bezug genommen.

Eine erfindungsgemäße Stirnwandanordnung umfasst im Wesentlichen eine Stirnwand 1, ein Verkleidungselement 2 mit einer Klappe 3 und mindestens ein Bauteil.

In Fig. 1 ist das Verkleidungselement 2 dargestellt, wie es mit drei Klemmscheiben 4 an der Stirnwand 1 des Motorraumes angebracht ist. Bei dem Verkleidungselement 2 handelt es sich im Wesentlichen um ein flächiges Verkleidungselement, welches die Stirnwand 1 zu einem großen Teil überdeckt. Ferner ist die Klappe 3 erkennbar, die ebenfalls flächig ausgestaltet ist und mit einem Scharnier, beispielsweise einem Filmscharnier, insbesondere einem Filmscharnier aus Aluminiumfolie, an dem Verkleidungselement 2 angebracht ist.

In Fig. 2 ist erkennbar, dass die Klappe 3 wahlweise in einen geöffneten Zustand verschwenkt werden kann. In diesem geöffneten Zustand sind die Bauteile zugänglich, die in einem geschlossenen Zustand der Klappe 3 verdeckt sind. Es ist erkennbar, dass zumindest ein Bauteil, insbesondere eine Bremsdruckleitung 6, 8, Unterdruckleitung, elektrische Leitung, Klimaleitung 5, 7 oder ähnliche Leitung, von der Klappe 3 in einem geschlossene Zustand zumindest teilweise verdeckt werden können. Entsprechend sind die vorgenannten Bauteile in einem geöffneten Zustand zugänglich.

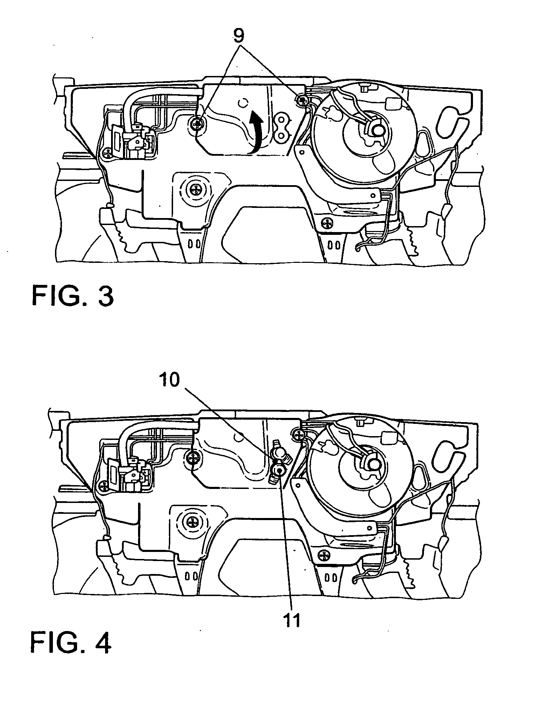

In der Fig. 3 ist erkennbar, dass die Klappe 3 durch Verschwenken aus einem geöffneten in einen geschlossenen Zustand überführt werden kann. In einem geschlossenen Zustand wiederum kann die Klappe 3 mit zwei Klemmscheiben 9 in dem geschlossenen Zustand lösbar fixiert werden. Die Klappe 3 verdeckt die oben genannten Bauteile nunmehr mindestens teilweise.

In Fig. 4 ist erkennbar, dass die Klappe 3 mit Öffnungen 10 ausgestattet ist, durch die in einem geschlossenen Zustand beispielsweise Wasseranschlüsse 11, die sich auf der Stirnwand 1 befinden, herausragen können.

Das Verkleidungselement 2 ist aus einem Material hergestellt, welches schalldämmende, vorzugsweise zusätzlich auch wärmeisolierende Eigenschaften aufweist. Die Klappe 3 ist aus einem Material hergestellt, welches schalldämmende und wärmeisolierende Eigenschaften aufweist.

Im Kundendienstfall in der Werkstatt kann es notwendig sein, aufgrund sehr begrenzter Bauraumverhältnisse, die Klappe 3 durch eine dann im Scharnierbereich angeordnete Perforation abzureißen. Nach nun optimierter Zugänglichkeit und erfolgreicher Reparatur kann die separate Klappe 3 an den mindestens zwei dafür vorgesehenen Befestigungspunkten fixiert werden.

## Patentansprüche

1. Stirnwandanordnung für einen Motorraum eines Kraftfahrzeugs, mindestens umfassend
- eine Stirnwand (1),
- mindestens ein an der Stirnwand (1) angebrachtes Bauteil,
- ein flächiges Verkleidungselement (2) mit schalldämmenden Eigenschaften,
**dadurch gekennzeichnet, dass**
- das Verkleidungselement (2) mit mindestens einer Klappe (3) ausgestattet ist, wobei
- die Klappe (3) wärmeisolierende Eigenschaften aufweist und wahlweise dazu eingerichtet ist, das mindestens eine Bauteil zu verdecken bzw. zugänglich zu machen.

2. Stirnwandanordnung nach Anspruch 1, **dadurch gekennzeichnet, dass** das Verkleidungselement (2) mit mindestens einer, vorzugsweise drei Klemmscheiben (4) an der Stirnwand (1) des Motorraumes angebracht ist.

3. Stirnwandanordnung nach mindestens einem der vorhergehenden Ansprüche, **dadurch gekennzeichnet, dass** es sich bei dem Verkleidungselement (2) um ein flächiges Verkleidungselement handelt, welches die Stirnwand (1) zumindest abschnittsweise, vorzugsweise vollständig; überdeckt.

4. Stirnwandanordnung nach mindestens einem der vorhergehenden Ansprüche, **dadurch gekennzeichnet, dass** die Klappe (3) flächig ausgestaltet ist und mit einem Scharnier, beispielsweise einem Filmscharnier, an dem Verkleidungselement (2) angebracht ist.

5. Stirnwandanordnung nach mindestens einem der vorhergehenden Ansprüche, **dadurch gekennzeichnet, dass** die Klappe (3) wahlweise in einen geöffneten Zustand und in einen geschlossenen Zustand verschwenkt werden kann, wobei das mindestens eine Bauteil in einem geöffneten Zustand zugänglich ist, und das mindestens eine Bauteil in einem geschlossenen Zustand durch die Klappe (3) verdeckt ist.

6. Stirnwandanordnung nach mindestens einem der vorhergehenden Ansprüche, **dadurch gekennzeichnet, dass** es sich bei dem mindestens einen Bauteil um eine Bremsdruckleitung (7), eine Unterdruckleitung, eine elektrische Leitung und/oder eine Klimaleitung (8) handelt.

7. Stirnwandanordnung nach mindestens einem der vorhergehenden Ansprüche, **dadurch gekennzeichnet, dass** es sich um mindestens zwei Bauteile, vorzugsweise eine Anzahl von Bauteilen, handelt, die wahlweise von der Klappe (3) verdeckt werden bzw. freigegeben werden können.

8. Stirnwandanordnung nach mindestens einem der vorhergehenden Ansprüche, **dadurch gekennzeichnet, dass** die Klappe (3) mit mindestens einer Klemmscheibe (9), vorzugsweise zwei Klemmscheiben, lösbar mir der Stirnwand (1) verbunden ist.

9. Stirnwandanordnung nach mindestens einem der vorhergehenden Ansprüche, **dadurch gekennzeichnet, dass** die Klappe (3) mit Öffnungen (10) ausgestattet ist, durch die in einem geschlossenen Zustand Anschlüsse, beispielsweise Wasseranschlüsse (11), die sich auf der Stirnwand (1) befinden, herausragen können.

10. Stirnwandanordnung nach mindestens einem der vorhergehenden Ansprüche, **dadurch gekennzeichnet, dass** es sich bei dem Filmscharnier um Aluminiumfolie handelt oder das Filmscharnier zumindest teilweise aus Aluminiumfolie besteht.

## Claims

1. End wall arrangement for an engine compartment of a motor vehicle, at least comprising
- an end wall (1),
- at least one component mounted on the end wall (1),
- a planar covering element (2) having sound-absorbing properties,
**characterized in that**
- the covering element (2) is provided with at least one flap (3),
- the flap (3) having heat-insulating properties and being configured optionally to cover the at least one component or to render the latter accessible.

2. End wall arrangement according to Claim 1, **characterized in that** the covering element (2) is mounted on the end wall (1) of the engine compartment by at least one, preferably three clamping disks (4).

3. End wall arrangement according to at least one of the preceding claims, **characterized in that** the covering element (2) is a planar covering element which at least partially, preferably completely, covers the end wall (1).

4. End wall arrangement according to at least one of the preceding claims, **characterized in that** the flap (3) is configured to be planar and is mounted on the covering element (2) by a hinge, for example a film hinge.

5. End wall arrangement according to at least one of the preceding claims, **characterized in that** the flap (3) can optionally be pivoted into an open state and into a closed state, the at least one component being accessible in an open state, and the at least one component being covered by the flap (3) in a closed state.

6. End wall arrangement according to at least one of preceding claims, **characterized in that** the at least one component is a brake pressure line (7), a negative pressure line, an electric line and/or an air conditioning line (8).

7. End wall arrangement according to at least one of the preceding claims, **characterized in that** there are at least two components, preferably a number of components, which can optionally be covered by the flap (3) or opened up.

8. End wall arrangement according to at least one of the preceding claims, **characterized in that** the flap (3) is connected releasably to the end wall (1) by at least one clamping disk (9), preferably two clamping disks.

9. End wall arrangement according to at least one of the preceding claims, **characterized in that** the flap (3) is provided with openings (10) through which connections, for example water connections (11), which are located on the end wall (1) can protrude in a closed state.

10. End wall arrangement according to at least one of the preceding claims, **characterized in that** the film hinge is aluminum foil or the film hinge is at least partially composed of aluminum foil.

## Revendications

1. Ensemble de paroi frontale pour un compartiment-moteur d'un véhicule à moteur, au moins comportant
- une paroi frontale (1),
- au moins une partie structurale montée sur la paroi frontale (1),
- un élément de revêtement plan (2) présentant des propriétés d'insonorisation,
**caractérisé en ce que**
- l'élément de revêtement (2) est doté d'au moins un volet (3),
- le volet (3) présentant des propriétés d'isolation thermique et étant conçu pour recouvrir ou rendre accessible de manière sélective l'au moins une partie structurale.

2. Ensemble de paroi frontale selon la revendication 1, **caractérisé en ce que** l'élément de revêtement (2) est monté sur la paroi frontale (1) du compartiment-moteur à l'aide d'au moins une, de préférence à l'aide de trois, rondelle(s) de serrage (4).

3. Ensemble de paroi frontale selon au moins l'une quelconque des revendications précédentes, **caractérisé en ce que** l'élément de revêtement (2) est un élément de revêtement plan qui recouvre la paroi frontale (1) au moins en partie, de préférence entièrement.

4. Ensemble de paroi frontale selon au moins l'une quelconque des revendications précédentes, **caractérisé en ce que** le volet (3) est configuré de manière plane et est monté sur l'élément de revêtement (2) à l'aide d'une charnière, par exemple d'une charnière film.

5. Ensemble de paroi frontale selon au moins l'une quelconque des revendications précédentes, **caractérisé en ce que** le volet (3) peut être pivoté de manière sélective dans un état ouvert et dans un état fermé, l'au moins une partie structurale étant accessible dans un état ouvert et l'au moins une partie structurale étant recouverte par le volet (3) dans un état fermé.

6. Ensemble de paroi frontale selon au moins l'une quelconque des revendications précédentes, **caractérisé en ce que** l'au moins une partie structurale est une conduite de pression de frein (7), une conduite à dépression, une ligne électrique et/ou une conduite de climatisation (8).

7. Ensemble de paroi frontale selon au moins l'une quelconque des revendications précédentes, **caractérisé en ce qu'**il s'agit d'au moins deux parties structurales, de préférence d'un certain nombre de parties structurales, qui peuvent être, de manière sélective, recouvertes par le volet (3) ou dégagées.

8. Ensemble de paroi frontale selon au moins l'une quelconque des revendications précédentes, **caractérisé en ce que** le volet (3) est relié de manière amovible à la paroi frontale (1) à l'aide d'au moins une rondelle de serrage (9), de préférence à l'aide de deux rondelles de serrage.

9. Ensemble de paroi frontale selon au moins l'une quelconque des revendications précédentes, **caractérisé en ce que** le volet (3) est doté d'ouvertures (10) à travers lesquelles peuvent sortir, dans un état fermé, des raccordements, par exemple des raccordements hydrauliques (11), qui se trouvent sur la paroi frontale (1).

10. Ensemble de paroi frontale selon au moins l'une quelconque des revendications précédentes, **caractérisé en ce que** la charnière film est une feuille d'aluminium ou **en ce que** la charnière film est constituée au moins partiellement d'une feuille d'aluminium.
